Europäisches Patentamt

European Patent Office

Office européen des brevets

(11) Publication number: **0 490 187 A1**

# EUROPEAN PATENT APPLICATION

(21) Application number: **91120526.8**

(22) Date of filing: **29.11.91**

(51) Int. Cl.5: **F01D 5/34**

(30) Priority: **14.12.90 US 628140**

(43) Date of publication of application:
**17.06.92 Bulletin 92/25**

(84) Designated Contracting States:
**DE FR GB IT SE**

(71) Applicant: **ALLIED-SIGNAL INC.**
**Columbia Road and Park Avenue P.O. Box 2245R**
**Morristown New Jersey 07962-2245(US)**

(72) Inventor: **Pinnow, Wayne R., c/o Allied-Signal Inc.**
**111 S. 34th St., P.O. Box 5217**
**Phoenix, Arizona 85010(US)**

(74) Representative: **Baillie, Iain Cameron et al**
**Ladas & Parry Altheimer Eck 2**
**W-8000 München 2(DE)**

(54) Low pressure plasma deposition fabrication of multi-alloy axial turbine wheels.

(57) An axial flow turbine wheel (20) is formed as a blade ring (32) having a generally cylindrical cast alloy shell with turbine blades (24) extending radially outwardly from the shell and a powder sprayed hub (34) within and integral with the blade ring. The blade ring (32) is preferably made of a material having good fatigue properties, while the hub (34) is made of an alloy that has good tensile and fatigue properties. To manufacture the turbine wheel, a backing plate (38) is provided on the blade ring (32), and powder particles of the hub alloy are sprayed into the interior of the blade ring (32). The resulting turbine wheel blank is hot isostatically pressed to improve the bonding between the hub (34) and the blade ring (32), heat treated as necessary, and final machined.

Fig. 1

This invention relates to aircraft gas turbine engines, and, more particularly, to the structure and fabrication of an axial flow turbine wheel.

In a typical aircraft gas turbine engine, air is drawn into the front of the engine, compressed in a compressor wheel, mixed with fuel, and burned. The hot exhaust gases impinge against a turbine wheel, causing the turbine wheel to turn on its shaft. The turbine shaft is connected to the shaft of the compressor wheel, so that the compressor wheel is driven by the impingement of the hot gases against the turbine wheel.

There are two principal types of such gas turbine, axial flow and radial flow. In the axial flow turbine, the exhaust gas flows essentially parallel to the turbine shaft axis, while in the radial flow turbine, the direction of the flow of the exhaust gas is turned through 90 degrees as it impinges against the turbine wheel. The geometry and consequent availability of various design approaches are quite different for the two types of turbines. The present invention deals with axial flow turbines, and is not suitable for use in relation to radial flow turbines.

The turbine wheel is subjected to some of the most demanding operating conditions of the various components in the engine, and, indeed, of any rotating machinery in any application. The turbine wheel turns on its shaft at high rotational speeds subjecting its parts to high radial stresses. The turbine wheel is vibrated and thermally cycled while in service. The hotter the exhaust gases, the better the efficiency of the engine, but also the more difficult it is to find materials for the gas turbine wheel that will withstand the operating conditions. Thus, the turbine wheel is subject to high stresses, fatigue, temperatures, thermal cycling stresses and strains, and, finally, corrosion conditions due to the fuel and minor components of the air that is burned, such as salt.

There has been much development of both designs and materials to permit the gas turbine wheel to function with ever-increasing performance. Today, most gas turbine wheels are made from nickel-based superalloys with a cast, coarse grain or single-crystal microstructure that is resistant to creep rupture failure and has good hot corrosion resistance.

There has been much development of both designs and materials to permit the gas turbine wheel to function with ever-increasing performance. Many of the modern gas turbine engines in use today rely upon the use of an axial turbine wheel to extract energy from the hot expanding gases. In general, no single material in use for advanced gas turbine designs is able to meet the combination of hot gas corrosion and stress rupture resistance, tensile strength, and low-cycle-fatigue (LCF) strength that is required in the turbine wheel. As a result, most axial turbine wheels consist of a combination of blades or airfoils attached to a separate disk. The blades of such a component are typically fabricated from nickel-base superalloys which have been optimized to provide a combination of excellent resistance to hot gas corrosion and stress rupture damage. The turbine disk, into which the blades are inserted and mechanically attached, are also fabricated from nickel-base superalloys, however these alloys have been optimized to achieve a balance of excellent tensile strength and low-cycle fatigue (LCF) resistance. As a result of the mechanical attachment of the blades to the turbine disk, the design requirements of an advanced gas turbine engine can be satisfied.

However, often the design of a modern turbine engine is limited by size and weight constraints. In such a situation, it is often the case that such limitations do not allow enough size for the turbine disk to support mechanically attached blades. That is, due to high blade loading and rotational speeds, the volume of turbine disk material that can be placed between the blade attachment area is not large enough to offset the high blade retention loads, and a design with an acceptable life cannot be produced.

As a way of attaining improved properties, it has been proposed to make an axial gas turbine wheel with an airfoil shell from one material and a hub disk from another material, see for example US Patent 4,335,997. The material of the airfoil shell is selected to achieve good creep resistance in the hot gas stream, and the material of the hub disk is selected to achieve the high strength required to support the airfoil shell. As disclosed in the '997 patent, the shell and the hub disk are fabricated as two separate pieces, and the hub disk is fitted axially to the airfoil shell. The structure is then hot isostatically pressed to achieve bonding along the relatively large interface between the two pieces.

Although the concept of using different materials in the central and outer portions of a single disk is promising, the inventor has found that the manufacturing approach of the '997 patent is practical only for a radial flow turbine, as described in that patent, and cannot be readily applied to an axial flow turbine. There is a need for a design and manufacturing technique for applying this same concept of a multi-material design to axial flow turbines. The present invention fulfills this need, and further provides related advantages.

The present invention provides a turbine wheel design and manufacturing process which permits the use of different materials, or the same material processed to achieve different properties, in the outer and the hub portions of the turbine wheel. The approach has been established by applying existing manufacturing technology in a new manner. The axial flow turbine wheel of the present invention has improved performance as compared with a conventional axial flow turbine wheel.

In accordance with the invention, an axial flow turbine wheel comprises a blade ring comprising a generally cylindrical shell with turbine blades extending radially outwardly from the shell, the blade ring having a cast microstructure; and a hub within and integral with the blade ring, the hub having a sprayed powder microstructure. The blade ring and the hub can be made of the same or different materials.

The blade ring for use in the axial flow turbine wheel desirably has a cast microstructure. The blade ring fabrication technique is normally chosen to produce a coarse grain size in the blade ring, and the blade ring may even be a single crystal structure. A number of suitable nickel-based superalloys are known for this application, and these alloys exhibit good mechanical properties, such as creep resistance and high stress rupture, and good physical properties, such as hot corrosion resistance. The sprayed powder microstructure of the hub is inherently a fine grained structure, which has good strength and fatigue resistance. Low pressure plasma spray deposition, in conjunction with suitable fixturing, has been found to be suitable for applying the sprayed powder material of the hub.

The axial flow gas turbine wheel is preferably fabricated by first-preparing the blade ring in a semi-finished form, using the techniques known in the industry such as casting, directional casting, etc. This semi-finished blade ring has the general form of a cylindrical shell that is short in the axial direction, and have the turbine blades integral to the periphery of the ring. A back plate that captures and retains metal particles within the interior of the shell is either formed integrally with the shell, or attached to the shell after it is formed.

Metal powder is sprayed into the volume defined by the shell on the sides and the back plate on the bottom, care being taken to maximize the adherence and metallurgical bonding of the powder to the shell and the powder particles to each other. Low pressure plasma deposition, a technique known in the industry, is preferably used to deposit the powder, because it produces good bonding and cleanliness and also, of course, good final properties in the hub section. Powder spray deposition of many superalloys and other materials produces good mechanical and physical properties, in part resulting from the fine grain structure that results. Thus, the preferred approach of the invention results in a coarse grain outer periphery of the axial flow turbine wheel, and a fine grain hub.

The present approach provides an important advance in the art of axial flow turbine wheels. An axial flow turbine wheel can be made in a "composite form, with different microstructures and materials in the outer periphery and hub regions to achieve different properties in those regions. The designer can therefore tailor the axial flow turbine wheel to meet particular operating requirements, and in particular operating requirements, and in particular can select different combinations of structures and materials to extend the useful life of the regions and the turbine wheel as a whole. Other features and advantages of the invention will be apparent from the following more detailed description of the preferred embodiment, taken in conjunction with the accompanying drawings, which illustrate, by way of example, the principles of the invention.

Figure 1 is a perspective view of an axial flow turbine wheel, sectioned to show the cross sectional form;

Figure 2 is a perspective view of a semi-finished blade ring with a back plate attached to one end of the cylindrical shell, sectioned to show the cross sectional form;

Figure 3 is a perspective view of a structure of Figure 2, after powder spray deposition;

Figure 4 is a perspective view of the structure of Figure 3, after rough machining;

Figure 5 is a metallurgical micrograph of the cast structure of the blade ring portion of the finished turbine wheel of Figure 1; and

Figure 6 is a metallurgical micrograph of the sprayed powder structure of the hub portion of the finished turbine wheel of Figure 1.

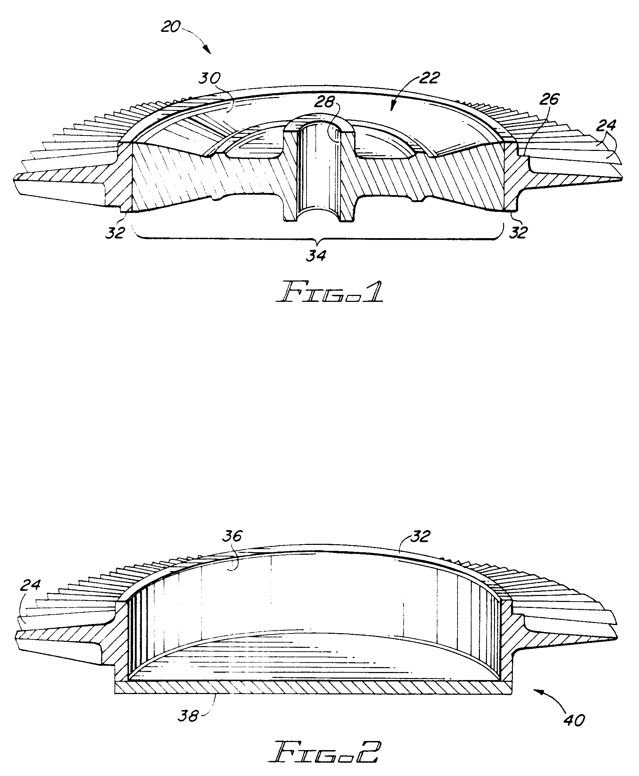

Figure 1 illustrates a finished axial flow turbine wheel 20, such as could be used in a gas turbine (or jet) engine. The turbine wheel 20 includes a generally cylindrical disk 22 and a plurality of turbine blades 24 extending radially outwardly from a periphery 26 of the disk 22. The blades 24 may be integral with the periphery 26 of the disk 22, or can be made separately and then fitted into slots on the periphery of the disk. The disk 22 has a central cylindrical bore 28 that fits onto a central power shaft of a gas turbine engine (not shown). A face 30 of the disk 22 is machined to form various surfaces as required for the detailed design of the disk 22, and to reduce weight where material is not needed.

When viewed macroscopically in the final form shown in Figure 1, the turbine wheel 20 appears to be, and is, a single integral body. However, as a result of the method of manufacture to be discussed herein, the disk 22 may be described in terms of two regions that may be of different compositions and/or metallurgical microstructures. A blade ring 32 is a generally cylindrical shell whose axial dimension is small compared to its diameter.

The blade ring 32 forms the radially largest portion of the disk 22, and the periphery 26 is part of the blade ring 32. Thus, the turbine blades 24 are attached to the outer surface of the blade ring 32. A hub 34 fills the interior of the cylindrical shell of the blade ring 32, except for portions machined away such as the bore 28 and the machined-away regions of the face 30.

The reason for forming the disk 22 with these two distinct regions 32 and 34 has been discussed previously, but may now be discussed with more specific reference to the structure. When the turbine wheel 20 turns on the shaft that extends through the bore 28, the outer portions including the blade ring 32 extend into the hot gas stream. They consequently operate at highly elevated temperatures with the associated potential for oxidation and corrosion damage, and are subjected to creep deformation. The inner portions including the hub 34 operate at lower temperatures but much higher stresses due to the centrifugal loading of the portions that are at greater radii. The hub 34 must therefore be strong and have good fatigue resistance, while the blade ring 32 must have good creep resistance and be resistant to environmental damage in the hot gas stream. This characterization is, of course, only a generalization, and the regions must meet many other requirements. However, as a practical matter it is often observed that the outer peripheral regions of a turbine wheel fail due to creep and oxidation/corrosion damage, while the central regions fail due to tensile overload and/or fatigue. No single combination of material and processing is known that provides optimal properties in both the peripheral and central regions of a turbine disk.

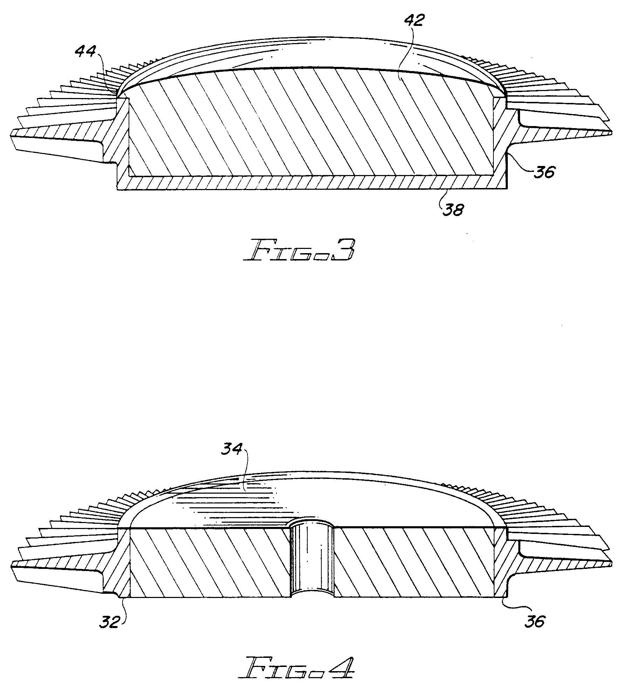

The method for preparing a turbine wheel is illustrated in Figures 2-4. In accordance with this aspect of the invention, a process for fabricating an axial flow turbine wheel comprises providing a semi-finished blade ring comprising a generally cylindrical shell; closing one end of the cylindrical shell with a backing plate to form a composite wheel preform; spraying metal particles into the cylindrical shell having one end closed with the backing plate, creating a hub within the cylindrical shell, the shell and hub together constituting a composite wheel blank; and hot isostatically pressing the composite wheel blank.

The first steps of this process provide the semi-finished blade ring closed at one end, as illustrated in Figure 2. In accordance with this aspect of the invention, an axial flow turbine wheel preform useful in the manufacturing of a turbine wheel comprises a semi-finished blade ring comprising a generally cylindrical shell, the blade ring having a cast microstructure; and means for capturing and retaining sprayed metal particles within the interior of the shell of the blade ring.

Referring to Figure 2, the blade ring 32 is first prepared by known techniques. In the preferred approach. The blade ring 32 is investment cast. The blade ring 32 has a cylindrical shell 36, in the illustrated embodiment with turbine blades 24 integrally attached. A back plate 38 closes one end of the cylindrical shell 36, forming a dish-like structure, termed a composite wheel preform 40, that is suitable for capturing and retaining sprayed metal particles in the next processing step. The back plate 38 may be cast integrally with the back cylindrical shell 36, or may be formed separately and attached to the cylindrical shell 36, or may even be part of a separate piece of structure that is held in place to close the end of the shell.

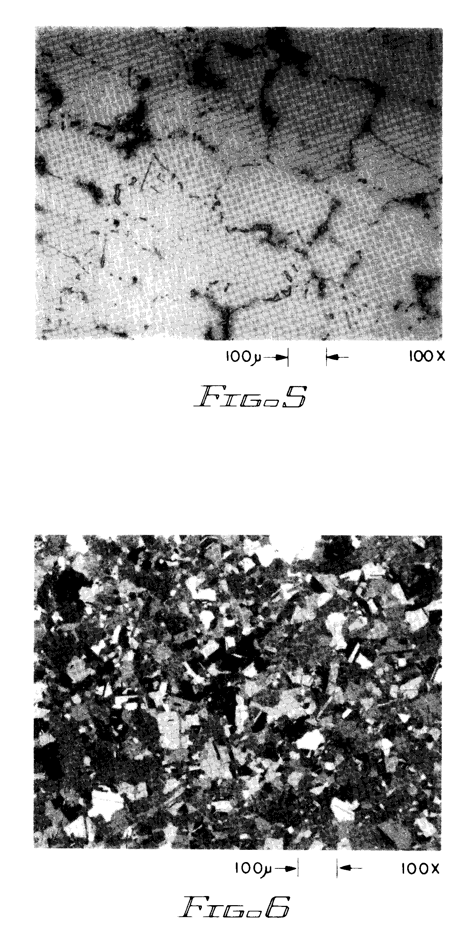

The hollow preform 40 is filled with a bulk deposit 42 of metal, as shown in Figure 3, by a powder spraying process, preferably Low Pressure Plasma Deposition (or "LPPD") deposition, LPPD deposition is a technique known in the art, but has not been applied to make a turbine wheel in the manner described herein. Briefly, in the low pressure plasma spray deposition process metal powders are continuously fed into a plasma chamber in which a high temperature plasma is formed by an electric arc. The metal powder is partially or completely melted in the plasma spray, and propelled out of the chamber in a gas flow. The glass flow and entrained partially or completely molten particles (termed herein "metal particles") are impinged upon a surface, where the particles adhere and the molten portions are rapidly quenched.

Low pressure plasma deposition is described more fully in "ARC Plasma Technology in Materials Science", by D. A. Gerdeman & N. L. Mecht, Springer-Verlag, New York, 1972, or, "Thermal Spray Coatings" by J. H. Clare & D. E. Crawner, in "Metals Handbook, 9th Edition, Volume 5: Surface Cleaning, Finishing, and Coating", American Society for Metals, Metals Park, Chicago, 1982.

As-deposited powder material produced by the LPPD inherently has a fine grain size as small as ASTM 12, which may subsequently coarsen to the range of ASTM 6, but in any event remains small compared to the grain size of the material used to form the blade ring 32. LPPD is conducted in vacuum or inert atmosphere, so that the deposited material has a low content of entrapped gas, oxides, and other deposition defects. Because a portion of the particles are molten as they deposit, a good bond is formed to the substrate and to the other particles. Fine-grained structures generally perform better in high monotonic loading and fatigue loading than do coarse-grained structures, while the coarse-grained structures perform better in creep deformation. The approach of the invention provides material of the needed grain size in the central and peripheral regions of the disk 22.

Although the LPPD process provides good bonding between the bulk deposit 42 an the inner wall of the cylindrical shell 36, and interiorly within the bulk deposit 42, that bonding can be improved. To this end, an excess of metal is provided in the bulk deposit 42, as shown in Figure 3, producing an overfill 44. The structure of Figure 3, producing an overfill 44. The structure of Figure 3 is placed into a hot isostatic press and pressurized at elevated temperature. The pressing closes voids in the bulk deposit 42 and in the cylindrical shell 36, and improves the bonding of the bulk deposit 42 to the cylindrical shell 36 and within the bulk deposit 42. The result is improved strength of the final structure.

The hot isostatically pressed article may be final machined directly to the form shown in Figure 1. Preferably, it is first rough machined to the form shown in Figure 4, with squared off end or other facial structure that is suitable for nondestructive testing. Nondestructive testing may be of several forms known in the industry, but typically includes ultrasonic testing of the article.

After the article has satisfactorily passed the testing requirements, it may be heat treated according to procedures recommended for the particular alloys selected for use in the blade ring 32 and the hub 34. For example, the alloys may be strengthened by gamma/gamma prime strengthening mechanisms, which require the proper final heat treatment after the prior procedures to achieve the optimal properties. The heat treatment must be chosen for joint optimization of the properties, and will therefore depend upon the particular alloys used for the regions. Ultimately, the article is final machined to the form shown in Figure 1.

A key reason for utilizing the present fabrication approach is to achieve different metallurgical microstructures in the blade ring 32 (cylindrical shell 36), and in the hub 34. The same alloy composition may be used to form the blade ring 32 and the hub 34, or different compositions may be used in the two regions. However, the grain structure of the two regions will always be different, for the reasons indicated previously. Figure 5 illustrates the microstructure of the blade ring 32 of a turbine wheel prepared by the present approach, with a coarse grain structure. The blade ring 32 is preferably made of a nickel-based superalloy which has been developed for good creep resistance and resistance to environmental damage, such as IN713LC, MAR-M 247, IN738. In the case of Figure 5, the blade ring 32 was mde of IN713LC. Figure 6 illustrates the fine grain, sprayed powder microstructure of the hub 34. The hub 34 is preferably made of a different nickel-based superalloy which has been developed for good strength and fatigue resistance, such as LC Astroloy, U720, RAVE 95, MERL 76. In the case of Figure 5, the hub 32 was made of LC Astroloy.

The present invention permits the fabricators of axial flow gas turbine wheels a new degree of flexibility to tailor turbine wheels to the specific requirements of an engine. Although a particular embodiment of the invention has been described in detail for purposes of illustration, various modifications may be made without departing from the spirit and scope of the invention. Accordingly, the invention is not to be limited except as by the appended claims.

## Claims

1. An axial flow turbine wheel, comprising:

   a blade ring comprising a generally cylindrical shell with turbine blades extending radially outwardly from the shell, the blade ring having a cast microstructure; and

   a hub within and integral with the blade ring, the hub having a sprayed powder microstructure.

2. The wheel of claim 1, wherein the blade ring is formed of a first alloy.

3. The wheel of claim 1, wherein the hub is formed of a second alloy.

4. An axial flow turbine wheel preform useful in the manufacturing of a turbine wheel, comprising:

   a semi-finished blade ring comprising a generally cylindrical shell, the blade ring having a cast microstructure; and

   means for capturing and retaining sprayed metal particles within the interior of the shell of the blade ring.

5. The turbine wheel preform of claim 4, wherein the means for capturing and retaining is a back plate joined to the semi-finished blade ring to close the cylindrical shell on one end.

6. A process for fabricating an axial flow turbine wheel, comprising:

   providing a semi-finished blade ring comprising a generally cylindrical shell;

   closing one end of the cylindrical shell with a backing plate to form a composite wheel preform;

spraying metal particles into the cylindrical shell having one end closed with the backing plate, creating a hub within the cylindrical shell, the shell and hub together constituting a composite wheel blank; and

hot isostatically pressing the composite wheel blank.

7. The process of claim 6, wherein the step of closing is performed by attaching a separate backing plate onto the cylindrical shell.

8. The process of claim 6, wherein the step of spraying is performed by low pressure plasma deposition.

9. The process of claim 6, including the additional step, after the step of hot isostatically pressing, of

final machining the composite wheel blank to form an axial flow turbine wheel.

10. An axial flow turbine wheel prepared by the process of claim 9.

_Fig.1_

_Fig.2_

*Fig. 3*

*Fig. 4*

100μ→| |← 100 X

*FIG. 5*

100μ→| |← 100X

*FIG. 6*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 085 778 (GENERAL ELECTRIC)<br>* page 1, line 5 - line 14 *<br>* page 2, line 30 - line 38 *<br>* page 2, line 64 - page 3, line 25; figures 1-6 * | 1-4 | F01D5/34 |
| A | | 6,8 | |
| | --- | | |
| Y | EP-A-0 042 744 (GARRETT CORP.)<br>* page 5, line 22 - page 6, line 8 *<br>* page 8, line 11 - page 11, line 25; figures 1,2,4 * | 1-4 | |
| A | | 6,7,9,10 | |
| | --- | | |
| A | EP-A-0 352 408 (ALLIED-SIGNAL)<br>* abstract *<br>* column 1, line 10 - line 13 *<br>* column 3, line 28 - column 4, line 37; figures * | 1-4,8,8 | |
| | --- | | |
| A | FR-A-2 309 707 (KLOCKNER-HUMBOLDT)<br>* page 1, line 1 - line 3 *<br>* page 2, line 32 - page 4, line 5; figures * | 1-3 | **TECHNICAL FIELDS SEARCHED (Int. Cl.5)** |
| | ----- | | F01D |

The present search report has been drawn up for all claims

| Place of search | Date of completion of the search | Examiner |
|---|---|---|
| THE HAGUE | 09 MARCH 1992 | ZIDI K. |

EPO FORM 1503 03.82 (P0401)